# EUROPEAN PATENT APPLICATION

(11) **EP 1 961 713 A1**
(43) Date of publication of application: **27.08.2008**
(21) Application number: 06832558.8
(22) Date of filing: 13.11.2006
(51) Int. Cl.: C04B 12/00, C04B 28/36, C08G 75/10

(54) **BINDER CONTAINING MODIFIED SULFUR AND PROCESS FOR PRODUCING MATERIAL CONTAINING MODIFIED SULFUR**

(30) Priority: 14.11.2005 JP 2005328824
(71) Applicant: Nippon Oil Corporation, Tokyo 105-8412 (JP)
(72) Inventor: KIHARA, Tsutomu, Yokohama-shi, Kanagawa 2310815 (JP); MORIHIRO, Toshio, Yokohama-shi, Kanagawa 2310815 (JP); NAKATSUKA, Yasuo, Yokohama-shi, Kanagawa 2210021 (JP); KAMINADE, Tadahiro, Yokohama-shi, Kanagawa 2310815 (JP)
(74) Representative: Hallybone, Huw George
(86) International application number: PCT/JP2006/322546
(87) International publication number: WO 2007/055351

(57) **Abstract**

The present invention provides a method for producing a binding material containing modified sulfur which gives excellent ignition resistance, mechanical strength, water sealability, and resistance to sulfur-oxidizing bacteria, and which may be usable for sealing domestic and industrial wastes, and a method for producing, with easy control, a material containing modified sulfur using the binding material. The method for producing the binding material includes the steps of providing a starting material for modified sulfur composed of 100 parts by mass of sulfur and 0.1 to 25 parts by mass of ethylidene norbornene (ENB), mixing the starting material in a molten state at 120 to 160 °C, and when the viscosity at 140 °C of the resulting molten mixture falls in the range of 0.050 to 3.0 Pa·s, cooling the molten mixture down to a temperature not higher than 120 °C. The method for producing the material containing modified sulfur includes the steps of, after the binding material is prepared, mixing 10 to 50 mass% of the binding material and 50 to 90 mass% of aggregate at 120 to 160 °C, while the viscosity at 140 °C of the binding material is maintained within a range of 0.050 to 3.0 Pa·s, and cooling the resulting mixture down to a temperature not higher than 120 °C.

## Description

The present invention relates to a method for producing a binding material containing sulfur modified with ethylidene norbornene (ENB), and a method for producing a material containing aggregate and modified sulfur, which makes it possible to reuse domestic and industrial wastes as civil engineering or construction materials.

Application of sulfur as civil engineering and construction materials has been under research, which makes use of its properties to melt over 119°C and be solid at ordinary temperatures. For example, Patent Publication 1 proposes to use sulfur as a material for paving roads, Patent Publication 2 proposes to use sulfur as a construction material, and Patent Publication 3 proposes to use sulfur as a binding material used in a material for sealing waste.

However, a binding material composed solely of sulfur will give a molded product having sulfur exposed on its outer surface, which is ignitable. Such molded product also has various other disadvantages such as insufficient mechanical strength and inferior resistance to sulfur-oxidizing bacteria, so that the product has not been used widely.

In order to improve the properties of sulfur, various additive compounds have been developed. Among such compounds, dicyclopentadiene is inexpensive and economical, and is known to have good effect on mechanical strength of sulfur.

Patent Publication 4 discloses a method for producing a sulfur composition including mixing in a molten state 100 parts by mass of sulfur and 2 to 20 parts by mass of dicyclopentadiene, followed by cooling, and a method for producing a sulfur composition further including mixing aggregate thereto under particular conditions.

However, in the production method using dicyclopentadiene,viscositystability during the reaction and non-ignitability of the molded products are hard to be balanced.

Patent Publication 5 discloses a method for producing a binding material containing modified sulfur, including mixing in a molten state 100 parts by mass of sulfur and 0.1 to 25 parts by mass of tetrahydroindene at 120 to 160 °C, followed by cooling to 120 °C or lower, and a method for producing a modified sulfur material further including mixing aggregate thereto under particular conditions.

The method using tetrahydroindene, however, is not economical, and disadvantageously produces a large amount of hydrogen sulfide in the reaction.

Patent Publications 6 and 7 propose to addvinyl toluene, dipentene, or other olefin oligomers to sulfur to improve its property for use in paving materials, adhesives, sealing materials, or the like.

Patent Publication 8 discloses a sulfur polymer cement composed of a product of polymerization of sulfur and a reactant composed of 10 to 90 wt% ENB and a styrene monomer. This sulfur polymer cement solidifies heavy metal-containing waste to prevent effluence of harmful heavy metal into environment in treatment of the waste, and to reduce the volume of the waste.

This publication teaches that the product of treatment with the sulfur polymer cement may be used as civil engineering or construction materials or aggregate. However, the sulfur polymer cement using a reactant essentially containing ENB and a styrene monomer has insufficient mechanicalstrength,ignition resistance,and resistance to sulfur-oxidizing bacteria. Thus the sulfur polymer cement cannot practically withstand the use as civil engineering or construction material with aggregate.
Patent Publication 1: US-4290816-A
Patent Publication 2: JP-48-91123-A
Patent Publication 3: JP-59-26180-A
Patent Publication 4: JP-2002-69188-A
Patent Publication 5: JP-2003-277108-A
Patent Publication 6: JP-55-133426-A
Patent Publication 7: JP-56-501102-A
Patent Publication 8: JP-8-3317-A

It is an object of the present invention to provide a method for producing a binding material containing modified sulfur that may be used with even domestic and industrial wastes as aggregate to produce civil engineering or construction materials having excellent ignition resistance, mechanical strength, water sealability, and resistance to sulfur-oxidizing bacteria, and that allows efficient production, with easy reaction control, of the binding material which may be usable for sealing domestic and industrial wastes.

It is another obj ect of the present invention to provide a method for producing a material containing modified sulfur, with easy control, that has excellent ignition resistance, mechanical strength, water sealability, and resistance to sulfur-oxidizing bacteria, and that sufficiently fulfills performance requirements for civil engineering or construction materials, even when domestic and industrial wastes are used as aggregate therein.

According to the present invention, there is provided a method for producing a binding material containing modified sulfur comprising the steps of:
(a) providing a starting material for modified sulfur consisting of 100 parts by mass of sulfur and 0.1 to 25 parts by mass of ethylidene norbornene (ENB),
(b) mixing said starting material for modified sulfur in a molten state at 120 to 160 °C, and
(c) when a viscosity at 140 °C of a molten mixture resulting from step (b) falls in a range of 0.050 to 3.0 Pa·s, cooling said molten mixture down to a temperature not higher than 120 °C.

According to the present invention, there is also provided a method for producing a material containing aggregate and modified sulfur, comprising the steps of:
(a) providing a starting material for modified sulfur consisting of 100 parts by mass of sulfur and 0.1 to 25 parts by mass of ENB,
(b) mixing said starting material for modified sulfur in a molten state at 120 to 160 °C,
(c) when a viscosity at 140 °C of a molten mixture resulting from step (b) falls in a range of 0.050 to 3.0 Pa·s, cooling said molten mixture down to a temperature not higher than 120 °C to prepare a binding material containing modified sulfur,
(d) mixing 10 to 50 mass% of said binding material containing modified sulfur and 50 to 90 mass% of aggregate at 120 to 160 °C, while a viscosity at 140 °C of said binding material is maintained within a range of 0.050 to 3.0 Pa·s, and
(e) cooling a resulting mixture down to a temperature not higher than 120 °C.

According to the present invention, there is further provided a method for producing a material containing aggregate and modified sulfur, comprising the steps of:
(a-1) providing a starting material (M) comprising aggregate and a starting material for modified sulfur consisting of 95 to 98 mass% sulfur and 2 to 5 mass% ENB,
(b-1) mixing said starting material (M) at 135 to 150 °C for 2 to 5 hours to prepare a mixture of said aggregate and a binding material containing modified sulfur, and
(c-1) cooling said mixture down to a temperature not higher than 120 °C.

The content of aggregate in step (a-1) is preferably 50 to 90 mass% of the total amount of the starting material (M). Step (b-1) may be performed by first mixing in a molten state the starting material for modified sulfur consisting of sulfur and ENB, and then mixing the aggregate thereto.

Since the method for producing a binding material containing modified sulfur according to the present invention includes steps (a) to (c) mentioned above, a binding material containing modified sulfur that may be used for sealing domestic and industrial wastes, may be obtained efficiently with easy reaction control. Further, the resulting binding material, even when used for preparing civil engineering or construction materials using domestic and industrial wastes as aggregate, may give excellent ignition resistance, mechanical strength, water sealability, and resistance to sulfur-oxidizing bacteria, to the civil engineering or construction materials.

Since the method for producing a material containing aggregate and modified sulfur according to the present invention includes steps (a) to (e) or steps (a-1) to (c-1) mentioned above, even when domestic and industrial wastes are used as aggregate, a material containing modified sulfur may be obtained with easy control, which has excellent ignition resistance, mechanical strength, water sealability, and resistance to sulfur-oxidizing bacteria, and sufficiently fulfills properties required for civil engineering and construction materials.

The present invention will now be explained in detail.

In the method for producing a binding material containing modified sulfur according to the present invention, first, step (a) is performed, wherein a starting material for modified sulfur composed of sulfur and ENB at a particular ratio is provided.

The sulfur provided in step (a) is ordinary elemental sulfur, and may be, for example, natural sulfur, or sulfur obtained by desulfurization of petroleum or natural gas.

The ENB provided in step (a) may be a commercial product referred to as ethylidene norbornene, or ENB of usually not lower than 80 mass% purity, preferably not lower than 90 mass% purity, more preferably not lower than 95 mass% purity, most preferably not lower than 98 mass% purity. Crude ENB from an ENB production plant prior to purification into ENB, which may contain a trace amount of vinyl norbornene, may also be used as long as the above purity is met.

On the other hand, by-product oils from an ENB production plant may contain 20 mass% or more of by-products, such as tetrahydroindene (THI), so that such by-product oils with less than 80 mass% ENB content may not be used in the present invention.

The ratio of ENB is usually 0.1 to 25 parts by mass, preferably 0.3 to 5 parts by mass, more preferably 2.0 to 5 parts by mass, still more preferably 2.5 to 4.5 parts by mass, based on 100 parts by mass of sulfur. If the ratio of ENB is less than the above range, the resulting binding material may not be given sufficient strength. The properties of the solid material obtained by mixing the resulting binding material with aggregate, i.e., fire resistance, water sealability, resistance to sulfur-oxidizing bacteria, and the like, depend on the ratio of ENB. Usually, a higher ratio gives improved properties, and viscosity properties are added to the elasticity to give a viscoelastic product, which is easy to distort and difficult to be damaged due to its increased viscosity. However, if the ratio of ENB exceeds the above range, viscosity properties become remarkable, and the viscosity increases at a high rate during production, causing difficulties in reaction control.

Incidentally, when sulfur and ENB are mixed in a molten state as will be discussed later in a hermetically sealed stirring reactor, even a small amount of ENB can sufficiently modify sulfur. Use of a hermetically sealed stirring reactor also inhibits evaporation loss of ENB by heat from the molten sulfur. Thus, when such a hermetically sealed stirring reactor is used, the ratio of ENB with respect to 100 parts by mass of sulfur may be as low as 0.1 to 2 parts by mass, whichmay sufficiently improve the properties of sulfur.

In the method for producing a binding material containing modified sulfur according to the present invention, next, step (b) is performed, wherein the starting material for modified sulfur is mixed in a molten state at 120 to 160 °C, preferably 130 to 150 °C, more preferably 135 to 140 °C.

The mixing in a molten state in step (b) may be carried out, for example, by first melting sulfur under heating, and then adding a predetermined amount of ENB thereto little by little.

When solid sulfur is heated, the solid-to-liquid phase change usually starts at 119 °C. Thus it is preferred for easy reaction control to first liquefy sulfur, stir the mass, and raise the temperature to about 130 °C while the viscosity is monitored with a suitable viscometer, such as a type B viscometer, and then add ENB.

The rate of increase in viscosity of the molten mass during the mixing in a molten state depends on the reaction temperature, with a higher temperature resulting in a higher rate. When the mixing in a molten state is performed at lower than 120 °C, sulfur is not modified easily, whereas when the mixing in a molten state is performed at over 160 °C, the viscosity tends to increase sharply, and is hardly controllable. When the mixing in a molten state is performed at about 130 °C, sulfur and ENB polymerize slowly without sudden heat generation or viscosity increase, and only slight rise in temperature and viscosity is observed so that the viscosity is maintained substantially constant. Thus, step (b) of mixing in a molten state may be performed by, when no heat generation is confirmed, slowly raising the temperature to the above range.

The mixing in a molten state in step (b) may be carried out in any conventional mixer as long as thorough mixing is achieved. For production of the binding material containing modified sulfur, a mixer for stirring liquid may be preferred, such as an internal mixer, a roll mill, a drum mixer, a pony mixer, a ribbon mixer, a homomixer, and a static mixer.

When an hermetically sealed mixer is used, even a small amount of ENB can cause sufficient sulfur-modifying reaction. Among such hermetically sealed mixers, a static mixer is particularly preferably used for its stirring efficiency.

In the method for producing a binding material containing modified sulfur according to the present invention, step (c) is then performed, wherein, when the viscosity at 140 °C of the molten mixture resulting from step (b) falls in the range of 0.050 to 3.0 Pa·s, the molten mixture is cooled down to a temperature not higher than 120 °C, to thereby obtain the objective binding material containing modified sulfur.

In step (c), the time point to start cooling down to a temperature not higher than 120 °C, i.e., the time point to terminate the reaction, may vary depending on the amount of ENB used and the temperature for mixing in a molten state, and may be decided in view of the viscosity of the molten mixture. In light of the strength and ignitability of the molded product produced with the binding material containing modified sulfur, or its workability during the production process, the comprehensively optimal viscosity at 140 °C is usually 0.050 to 1.5 Pa·s, particularly 0.050 to 0.07 Pa·s. When the molten mixture is cooled down to a temperature not higher than 120 °C before the viscosity reaches the above range, the resulting binding material may not give sufficient strength to civil engineering or construction materials prepared with the binding material, and the modifying effect of ENB is not exhibited sufficiently. With the progress of modification, the viscosity increases, and the strength of the resulting binding material also increases. If the viscosity is higher than the above range, the mixing in step (b) is hard, the workability is remarkably impaired, and the modifying effect is saturated.

The viscosity of the molten mixture may be monitored with a type B viscometer to see whether the above range has been reached. The viscosity is not necessarily measured continuously, but may be measured in batch. In the latter case, the timing of measurement may be estimated from the duration of the mixing in a molten state in step (b). For example, at 3 parts by mass of ENB with respect to 100 parts by mass of sulfur, the viscosity at 140 °C of the molten mixture reaches 0.05 Pa·s usually by mixing in a molten state at 140 °C for about 3 hours, or at 145 °C for about 1 hour.

In step (c) of cooling down to a temperature not higher than 120 °C, when the resulting binding material is subsequently mixed with aggregate or the like to prepare civil engineering or construction materials, the molten mixture is not necessarily cooled to a very low temperature, but when a solid binding material is to be prepared, the molten mixture is usually cooled down to near room temperature.

The resulting binding material containing modified sulfur is a sulfur modified by polymerization reaction of sulfur with ENB, and may contain pure sulfur. The binding material may also be referred to as sulfur cement or a sulfur binder. The binding material containing modified sulfur is useful in preparation of civil engineering or construction materials, and may be used, for example, in mixture with various aggregate, as paving material, construction material, or material for sealing wastes.

In the method for producing a binding material containing modified sulfur according to the present invention, if the starting material for modified sulfur contains a reactive material other than sulfur and ENB, for example, a styrene monomer, the resulting binding material, in mixture with aggregate, cannot give sufficient mechanical strength, ignition resistance, and resistance to sulfur-oxidizing bacteria to civil engineering or construction materials produced therewith, which are hard to withstand the use, even when the ratio of sulfur and ENB and the viscosity at 140 °C for starting cooling of the moltenmixture are set within the above-mentioned ranges, as will be demonstrated in Comparative Example 3.

The reason for the above is not known at present, but may be assumed that the styrene monomers, which have lower reactivity than ENB, can form with sulfur only a low ratio of polysulfide, a sulfur-bridged compound, which leaves a considerable amount of unreacted styrene monomer, resulting in deterioration of the desired properties.

The methods for producing a material containing aggregate and modified sulfur according to the present invention includes two methods, i.e., a method including the steps of (d) mixing 10 to 50 mass% of the binding material obtained by steps (a) to (c) of the method for producing a binding material containing modified sulfur according to the present invention, and 50 to 90 mass% of aggregate at 120 to 160 °C, while the viscosity at 140 °C of the binding material is maintained within the range of 0.050 to 3.0 Pa·s, and (e) cooling the mixture resulting from step (d) down to a temperature not higher than 120 °C (referred to as first method hereinbelow) ; and a method including the steps of (a-1) providing a starting material (M) containing aggregate and a starting material for modified sulfur consisting of 95 to 98 mass% sulfur and 2 to 5 mass% ENB, (b-1) mixing the starting material (M) at 135 to 150 °C for 2 to 5 hours to prepare a mixture containing the aggregate and a binding material containing modified sulfur, and (c-1) cooling the mixture down to a temperature not higher than 120 °C (referred to as second method hereinbelow).

The aggregate to be used in the first and second method is not particularly limited as long as it is usable as aggregate, and use of recyclable industrial wastes is preferred. The industrial wastes may be one or more of incinerated ash, incinerated fly ash, molten fly ash generated in a high temperature melting furnace for city waste, coal ash discharged from the electric power industry and general industry, fluidized sand used in fluidized bed incinerators, soil contaminated with heavy metals, grinding waste, and by-products of various metal productions, such as steel slag, steel dust, ferronickel slag, aluminum dross, and steel slag. In the first and second methods, wastes, such as steel slag, incinerated ash, or coal ash, may be reused as aggregate in a harmless form.

The steel slag is a by-product of the iron industry, and may include blast furnace slag, open furnace slag, converter furnace slag, and the like. The main components of the steel slag may be oxides such as silica, alumina, calcium oxide, and iron oxide, and also inorganic sulfides.

The incinerated ash is discharged from various combustion furnaces such as city waste incinerators and industrial waste incinerators, and is mainly composed of oxides such as silica, alumina, calcium oxide, and iron oxide, with high contents of toxic metals, such as lead, cadmium, and arsenic. The incinerated ash has been disposed of at sanitary landfill sites where no waste water is discharged, but the present invention enables use of such incinerated ash as aggregate.

The coal ash is discharged from various coal combustion furnaces for power generation, heating, and the like, and those conventionally used for concrete or as an admixture for civil engineering material may be used.

Examples of the aggregate used in the present invention may include aggregate other than those mentioned above, such as silica sand, claymineral, activated carbon, carbon fibers, glass fibers, vinylon fibers, aramid fibers, sand, gravel, and other inorganic and organic materials free of hazardous substances.

In step (d) of the first method, the mixing ratio of the binding material containing modified sulfur and the aggregate is 10 to 50 : 90 to 50, preferably 15 to 30 : 85 to 70 by mass. Most preferably, the binding material containing modified sulfur is at such a ratio as to fill the voids in the aggregate consolidated to the maximum density, at which ratio the maximum strength is achieved. When the amount of the binding material containing modified sulfur is less than the above range, the surface of the inorganic material as the aggregate cannot be wet sufficiently and is left exposed, resulting in insufficient expression of the strength and incapability of maintaining the water sealability. When the amount of the binding material exceeds the above range, the properties of the resultingproduct is similar to those of the bindingmaterial alone, and the strength is not sufficient.

The mixing ratio of the binding material containing modified sulfur and the aggregate may also vary depending on the kind of aggregate, and may suitably be selected from the above-mentioned range, taking the kind of aggregate into account. For example, when the aggregate is steel slag, the amount thereof may preferably be about 75 to 85 mass%.

In step (d) of the first method, the viscosity of the binding material containing modified sulfur increases with time during mixing, so that it is necessary to adjust the viscosity within an optimum range for easy handling. The viscosity at 140 °C of the binding material containing modified sulfur is 0.050 to 3.0 Pa·s, preferably 0.050 to 1.5 Pa·s, comprehensively optimally 0.050 to 0.07 Pa·s. At a viscosity less than the above range, the strength of the resulting material containing modified sulfur is too low, and the modifying effect of the binding material containing modified sulfur is not sufficiently exhibited. Though higher viscosity results in higher strength of the resulting material containing modified sulfur, when the viscosity exceeds the above range, the mixture is hard to be stirred during the production process, and its workability is remarkably impaired.

In step (d) of the first method, both the binding material containing modified sulfur and the aggregate are preferably preheated in order to avoid temperature drop upon mixing. It is preferred to preheat the aggregate to about 120 to 155 °C, thebindingmaterial containingmodified sulfur to 120 to 155 °C in as short a time as possible for avoiding progress of the reaction, and also the mixer to 120 to 155 °C.

The mixing maybe performed by introducing the preheated components substantially simultaneously into the mixer, and mixing usually at 120 to 160 °C, preferably 130 to 140 °C.

It is still more preferred to preheat the mixer to 130 to 140 °C, and the mixing is performed at 130 to 140 °C. In this case, the aggregate is preferably preheated to 130 to 140 °C, and the binding material containing modified sulfur is preferably preheated to 125 to 140 °C.

The mixing is performed usually for 1 minute to 1 hour, preferably about 5 to 30 minutes. The duration of the mixing is preferably as short as possible as far as the properties of the resulting product permit, for avoiding increase in viscosity or curing of the mixture due to polymerization of sulfur and ENB. However, if the duration of mixing is less than 1 minute, the aggregate and the binding material containing modified sulfur are not mixed thoroughly, so that the resulting material will not be given a continuous phase and will have voids or rough surfaces. If the duration of mixing exceeds 1 hour, the viscosity of the mixture may increase due to polymerization of sulfur and ENB.

In step (d), other components may optionally be mixed in addition to the aggregate and the binding material containing modified sulfur. Such other components may be added after the binding material containing modified sulfur is remelted, or immediately after the binding material is obtained and before it is cooled to solidify.

In step (e) of the first method, the mixture resulting from step (d) is cooled down to a temperature not higher than 120 °C, to thereby obtain the objective material containing modified sulfur. In this cooling step, the mixture resulting from step (d) may be made into a desired form, such as molded products, pellets, granules, or particles.

Instep (a-1) of the second method, the starting material (M) provided contains aggregate and a starting material for modified sulfur composed of sulfur and ENB. Examples of these materials are as listed above.

The content of sulfur in the starting material (M) is 95 to 98 mass%, preferably 96 to 97 mass%, and the content of ENB is 2 to 5 mass%, preferably 3 to 4 mass%.

Incidentally, use of a hermetically sealed stirring reactor as in the production of the binding material containing modified sulfur mentioned above, inhibits evaporation loss of ENB by heat from the molten sulfur. In this case, the amount of ENB may be as small as 0.1 to 2 parts by mass with respect to 100 parts by mass of sulfur, which may sufficiently improve the properties of sulfur. Thus the amount of ENB may be decided, taking these properties into account.

The amount of the aggregate is usually 50 to 90 mass%, preferably 70 to 85 mass% of the total amount of the starting material (M), but may preferably be selected suitably depending on the kind of aggregate.

Instep (b-1) of the second method, wherein the aggregate and the starting material for modified sulfur composed of sulfur and ENB are simultaneously mixed, the material containing aggregate and modified sulfur may be produced in one step, in contrast to the first method, wherein the binding material containing modified sulfur is first prepared. Thus the second method provides the objective material containing aggregate and modified sulfur in a shorter time as a whole by a simplified production process with simultaneous modification of sulfur and mixing with aggregate, even the mixing in a molten state takes longer time.

In step (b-1) of the second method, it is preferred to thoroughly stir or knead the starting material (M), with the starting material for modified sulfur being in a molten state, so as to achieve a homogeneous temperature over the mixture. The temperature for mixing is usually 135 to 150 °C, preferably 140 to 145 °C, and the duration of mixing is 2 to 5 hours, preferably 3 to 4 hours.

If the duration of mixing is less than 2 hours, ENB, sulfur and the aggregate are not mixed thoroughly, so that the resulting material will not be given a continuous phase and will have voids or rough surfaces, which leads to a problem of ignitability. With thorough mixing, the resulting material will be given a perfectly continuous phase with smooth surfaces. On the other hand, if the duration of mixing exceeds 5 hours, modification of sulfur proceeds to cause an increased viscosity, or even curing, of the modified sulfur, resulting in lowered workability.

In step (b-1) of the second method, presence of the solid aggregate in mixing sulfur and ENB in a molten state for modification, will make it difficult to determine the progress of the reaction between sulfur and ENB by directly measuring the viscosity. However, the basics of the reaction between sulfur and ENB are as discussed above, so that the reaction may be controlled by strictly controlling the temperature, manner, and duration of the mixing in accordance with the estimated progress of sulfur modification. For example, the temperature and duration of the mixing may preferably be 2 to 4 hours at 140 °C, and 2 to 3 hours at 145 °C.

The mixing in step (b-1) may be carried out, for example, by substantially simultaneously introducing sulfur preheated to 125 to 135 °C and ENB melted at 40 to 50 °C into a mixer preheated to 135 to 150 °C, subsequently introducing the aggregate preheated to about 125 to 155 °C, and mixing at 135 to 150 °C for 2 to 5 hours. It is more preferred to preheat the mixer to 140 to 145 °C, and carry out the mixing at 140 to 145 °C. The sulfur and ENB are mixed in advance so as not to inhibit polymerization reaction of sulfur by the presence of aggregate.

After step (b-1), step (c-1) of cooling the mixture down to a temperature not higher than 120 °C is carried out, to thereby obtain the objective material containing modified sulfur. In this cooling step, the mixture resulting from step (b-1) may be made into a desired form, such as molded products, pellets, granules, or particles. Before the cooling and solidification, when the mixture is fluidized to a desired degree, the temperature of the mixture may be lowered and the mixing may be continued for a while at 120 to 130 °C, for preventing excess viscosity increase of the modified sulfur. Alternatively, the molten mixture may be cooled to solidify into a bulk solid in any shape, which may be crushed to prepare a material containing modified sulfur.

The mixer used in the first and second methods may be any mixer as long as thorough mixing is provided, and a solid-liquid mixer may preferably be used, such as an internal mixer, a roll mill, a ball mill, a drum mixer, a screw extruder, a pug mill, a pony mixer, a ribbon mixer, or a kneader. When the amount of ENB is 0.1 to 2 parts by mass based on 100 parts by mass of sulfur, a hermetically sealed mixer is preferably used.

The cooling and solidifying in step (e) or (c-1), may be carried out while the molten mixture is poured into a mold of a desired shape, or is granulated in a granulating machine. The granulating process is not particularly limited, and may be performed in a machine of a rolling type having a drum or a tilting pan, or of a vibration type having a horizontal or tilting plate.

When the material containing modified sulfur produced by the first or second method is obtained in the form of, for example, particles, each particle has high strength, and the particle size is adjustable. Thus the particulate material is suitable for use as a construction material, and may also be used in the same way as crushed stone. Further, in the particulate material, the modified sulfur substantially seals the inorganic material contained therein against contact with surrounding water. Thus the inorganic material is hardly exposed outside, so that elusion of hazardous substances contained therein may be prevented to a certain extent. In addition, the material containing modified sulfur may be mixed with a cementitious material, such as cement, concrete, or gypsum, without affecting the curing behavior and the optimum moisture content of such cementitious material.

The material containing modified sulfur obtained by the first or second method in the form of molded products may be used, for example, as panel materials, flooring materials, wall materials, roof tiles, or underwater structures, making use of their moldability into any desired structure. When in the form of particles, the material may be used as landfilling materials, roadbed materials, filling materials, or aggregate for concrete.

The present invention will now be explained in more detail with reference to Examples and Comparative Examples, which are illustrative only and do not intend to limit the present invention. The binding materials and the molded products prepare in Examples and Comparative Examples were subjected to measurements and evaluations in accordance with the following methods. The results are shown in Tables 1 and 2.

### Ignition Resistance

The ignition resistance was evaluated in accordance with the ignitability test for evaluation of inflammable solids (Type 2 Dangerous Substance) defined in the Fire Defense Law. Specimens fallen under the category of Class 1 inflammable solids, which ignited within 3 seconds and continued to burn for 10 seconds or longer, and Class 2 inflammable solids, which ignited in not shorter than 3 seconds but not longer than 10 seconds and continued to burn, were indicated as "inflammable", and specimens which ignited in longer than 10 seconds and specimens which did not continue to burn were indicated as "not dangerous".

### Compressive Strength

A φ5 cm x 10 cm cylindrical specimen was prepared. On the seventh day from the preparation, the compressive strengthof the specimen was measured using a 30-ton TENSILON compressive strength measuring equipment.

### Resistance to Sulfur-oxidizing Bacteria

A 2 cm x 2 cm x 4 cm prismatic specimen and 100 ml of a culture solution (2.0 g of NH₄Cl, 4.0 g of KH₂PO₄, 0.3 g of MgCl₂·6H₂O, 0.3 g of CaCl₂·2H₂O, 0.01 g of FeCl₂·4H₂O, and 1.0 L of ion-exchanged water, pH adjusted to 3.0 with hydrochloric acid) were placed in a 500 ml baffled flask, inoculated with a starter (sulfur-oxidizing bacteria, *Thiobacillus thiooxidans* IFO 12544), and subjected to bacterial culture with rolling and shaking (170 rpm) in a thermostatic chamber at 28 °C. pH change and appearance of the specimen were observed after the inoculation. Here, pH drop indicates generation of sulfur ions by consumption of sulfur by the sulfur-oxidizing bacteria.

### Example 1

970 g of solid sulfur was placed in a stirring mixer, melted at 140 °C, and held at 135 °C. Then 30 g of ENB was added slowly, and stirred mildly for about 5 minutes. When no temperature rise was confirmed, the mixture was heated to 140 °C. The mixture started reacting, and the viscosity gradually rose. When the viscosity reached 0.06 Pa·s in 3 hours, the heating was immediately stopped, and the resulting material was poured into a suitable mold or a container, and cooled at room temperature to obtain binding material (A).

Next, aggregate composed of 1120 g of No. 3 silica sand, 1127 g of No. 7 silica sand, and 413 g of coal ash and preheated to 140 °C, and 840 g of binding material (A) re-heated to 140 °C to melt into a molten state were introduced substantially simultaneously into a kneader held at 140 °C. The molten mixture was kneaded for 20 minutes while its viscosity at 140 °C was maintained within the range of 0.05 to 0.07 Pa·s, poured into a cylindrical mold of 5 cm in diameter and 10 cm in height, and cooled to obtain molded product (A).

### Example 2

Binding material (B) and molded product (B) corresponding to binding material (A) and molded product (A), respectively, were prepared in the same way as in Example 1, except that the duration of reaction for preparing the binding material was 1 hour, and the viscosity then was 0.05 Pa·s.

### Example 3

Binding material (C) and molded product (C) corresponding to binding material (A) and molded product (A), respectively, were prepared in the same way as in Example 1, except that the duration of reaction for preparing the binding material was 6 hours, and the viscosity then was 0.07 Pa·s.

**Table 1**

| | | | Example 1 | Example 2 | Example 3 |
|---|---|---|---|---|---|
| Binding material | Starting material | Solid sulfur | 970 g | 970 g | 970 g |
| | | ENB | 30 g | 30 g | 30 g |
| | Duration of reaction | | 3 hours | 1 hour | 3 hours |
| | | | Binding material (A) | Binding material (B) | Binding material (C) |
| Molded Product | Aggregate | | Silica sand Coal ash | Silica sand Coal ash | Silica sand Goal ash |
| | | | Molded product (A) | Molded product (B) | Molded product (C) |
| Ignition resistance | | | not dangerous | not dangerous | not dangerous |
| Compressive strength (MN/m²) | | | 77 | 63 | 77 |
| Resistance to sulfur-oxidizing bacteria | | | pH drop: slight | pH drop: slight | pH drop: slight |

The molded products of Examples 1 to 3 were evaluated as "not dangerous" in the ignition resistance test, achieved sufficient compressive strength, and exhibited only a slight pH drop even after the lapse of 35 days in the test of resistance to sulfur-oxidizing bacteria, indicating that sulfur was not consumed by the sulfur-oxidizing bacteria.

### Comparative Example 1

Binding material (D) and molded product (D), both free of ENB, were prepared in the same way as in Example 1, except that the amount of the solid sulfur was 1000 g, and ENB was not used. The viscosity at the termination of the heating during preparation of the binding material was 0.06 Pa·s.

The molded product of Comparative Example 1 achieved sufficient compressive strength, but was evaluated as "inflammable" in the ignition resistance test, and exhibited a considerable pH drop after the lapse of 35 days in the test of resistance to sulfur-oxidizing bacteria, indicating that sulfur was consumed by the sulfur-oxidizing bacteria.

### Comparative Example 2

Binding material (E) and molded product (E), both free of ENB, were prepared in the same way as in Example 1, except that the amount of the solid sulfur was 950 g, and ENB was replaced with 50 g of dicyclopentadiene (DCPD). The viscosity at the termination of the heating during preparation of the binding material was 0.06 Pa·s.

The molded product of Comparative Example 2 was evaluated as "not dangerous" in the ignition resistance test, and exhibited only a slight pH drop even after the lapse of 35 days in the test of resistance to sulfur-oxidizing bacteria, but did not achieve sufficient compressive strength.

### Comparative Example 3

Binding material (F) and molded product (F), both free of ENB, were prepared in the same way as in Example 1, except that the amount of the solid sulfur was 970 g, and 30 g of ENB was replaced with 20 g of ENB and 10 g of styrene monomer (SM). The viscosity at the termination of the heating during preparation of the binding material was 0.06 Pa·s.

The molded product of Comparative Example 3 was evaluated as "inflammable" irrespective of the use of ENB, did not achieve sufficient compressive strength compared to Examples, and exhibited a considerable pH drop after the lapse of 35 days in the test of resistance to sulfur-oxidizing bacteria, indicating that sulfur was consumed by the sulfur-oxidizing bacteria.

**Table 2**

| | | | Comparative Example 1 | Comparative Example 2 | Comparative Example 3 |
|---|---|---|---|---|---|
| Binding material | starting material | Solid sulfur | 1000 g | 950 g | 970 g |
| | | | - | DCPD 50 g | ENB 20 g SM 10 g |
| | Duration of reaction | | 3 hours | 3 hours | 3 hours |
| | | | Binding material (D) | Binding material (E) | Binding material (F) |
| Molded Product | Aggregate | | Silica sand Coal ash | Silica sand Goal ash | Silica sand Coal ash |
| | | | Molded product (D) | Molded Product (E) | Molded product (F) |
| Ignition resistance | | | Inflammable | not dangerous | inflammable |
| Compressive strength (MN/m²) | | | 66 | 55 | 35 |
| Resistance to sulfur-oxidizing bacteria | | | pH drop: considerable | pH drop: slight | pH drop: considerable |

### Example 4

97 parts by mass of solid sulfur was placed in a stirring mixer, melted at 140 °C, and held at the same temperature. 3 parts by mass of ENB was slowly added, and the resulting mixture was mixed under stirring at 140 °C for 3 hours. The viscosity at 140 °C of the mixture was 0.054 Pa·s. Then 50 parts by mass of coal ash preheated to 140 °C was added and mixed, the heating was stopped, and the mixture was poured into a φ5 cm x 10 cm cylindrical mold and cooled to obtain a molded product.

The obtained molded product was subjected to the ignition resistance test, and found to be "not dangerous" .

### Comparative Example 4

A molded product was produced in the same way as in Example 4, except that the conditions of the mixing under stirring was changed to 140 °C for 1 hour.

The viscosity at 140 °C of the mixture after the mixing under stirring at 140 °C for 1 hour was 0.049 Pa·s.

The obtained molded product was subjected to the ignition resistance test, and found to be "inflammable".

## Claims

1. A method for producing a binding material containing modified sulfur comprising the steps of:
(a) providing a starting material for modified sulfur consisting of 100 parts by mass of sulfur and 0.1 to 25 parts by mass of ethylidene norbornene,
(b) mixing said starting material for modified sulfur in a molten state at 120 to 160 °C, and
(c) when a viscosity at 140 °C of a molten mixture resulting from step (b) falls in a range of 0.050 to 3.0 Pa·s, cooling said molten mixture down to a temperature not higher than 120 °C.

2. A method for producing a material containing aggregate and modified sulfur comprising the steps of:
(a) providing a starting material for modified sulfur consisting of 100 parts by mass of sulfur and 0.1 to 25 parts by mass of ethylidene norbornene,
(b) mixing said starting material for modified sulfur in a molten state at 120 to 160 °C,
(c) when a viscosity at 140 °C of a molten mixture resulting from step (b) falls in a range of 0.050 to 3.0 Pa·s, cooling said molten mixture down to a temperature not higher than 120 °C to prepare a binding material containing modified sulfur,
(d) mixing 10 to 50 mass% of said binding material containing modified sulfur and 50 to 90 mass% of aggregate at 120 to 160 °C, while a viscosity at 140 °C of said binding material is maintained within a range of 0.050 to 3.0 Pa·s, and
(e) cooling a resulting mixture down to a temperature not higher than 120 °C.

3. A method for producing a material containing aggregate and modified sulfur comprising the steps of:
(a-1) providing a starting material (M) comprising aggregate and a starting material for modified sulfur consisting of 95 to 98 mass% sulfur and 2 to 5 mass% ethylidene norbornene,
(b-1) mixing said starting material (M) at 135 to 150 °C for 2 to 5 hours to prepare a mixture of said aggregate and a binding material containing modified sulfur, and
(c-1) cooling said mixture down to a temperature not higher than 120 °C.
